# EUROPÄISCHE PATENTSCHRIFT

(11) **EP 2 455 642 B1**
(45) Veröffentlichungstag und Bekanntmachung des Hinweises auf die Patenterteilung: **18.02.2015**
(21) Anmeldenummer: 11008940.6
(22) Anmeldetag: 10.11.2011
(51) Int. Cl.: F16K 11/078, F16K 27/04

(54) **Sanitäre Einhebel-Mischarmatur**
Sanitary single lever mixer fitting
Mitigeur sanitaire à poignée simple

(30) Priorität: 17.11.2010 DE 102010051630
(43) Veröffentlichungstag der Anmeldung: 23.05.2012
(73) Patentinhaber: HANSA METALLWERKE AG, 70567 Stuttgart (DE)
(72) Erfinder: Harsch, Martin, 74395 Mundelsheim (DE)
(74) Vertreter: Ostertag, Ulrich

(56) Entgegenhaltungen:
- EP-A1- 0 356 404
- WO-A1-2008/120252
- DE-A1-102007 014 251
- DE-U1- 8 627 223
- DE-U1-202008 003 921
- US-A1- 2007 119 507

## Beschreibung

Die Erfindung betrifft eine sanitäre Einhebel-Mischarmatur nach dem Oberbegriff des Patentanspruchs 1.

Fast alle sanitären Einhebel-Mischarmaturen besitzen an der Oberseite des Gehäuses im Allgemeinen einen zylindrischen, nach oben ragenden Kragen, der die zum Aufnahmeraum der Steuerkartusche führende Öffnung umgibt und um den herum die ringförmige Kappe angeordnet ist. Diese Anordnung verhindert, dass Wasser von außen her durch den Spalt zwischen der ringförmigen Kappe und dem Gehäuse bis in den Aufnahmeraum der Steuerkartusche vordringen kann. Besondere Abdichtungsmaßnahmen sind hierfür nicht erforderlich.

Dieser grundsätzliche Aufbau solcher sanitärer Einhebel-Mischarmaturen bedingt in gewissem Umfange das Design, was die Gestaltungsmöglichkeiten beschränkt. Dies wird in jüngster Zeit als hinderlich empfunden.

Eine sanitäre Einhebel-Mischarmatur der eingangs genannten Art ist aus der DE 86 27 223 U1 bekannt geworden. Dort ist anstelle eines nach oben ragenden Kragens eine Dichtung zwischen einer ringförmigen dünnwandigen Kappe und dem Gehäuse vorgesehen, welche an der Außenmantelfläche eines zylindrischen Bereiches der Kappe anliegt, die in den Innenraum des Gehäuses eingeschoben ist. Sie dichtet in radialer Richtung gegen die Mantelfläche dieses Innenraumes ab. Umfangsdichtungen gegen das Eindringen von Wasser sind auch bei der DE 10 2007 014 251 A1 sowie der US 2007/0 119 507 A1 vorgesehen.

Eine Sanitärarmatur ähnlich derjenigen der eingangs genannten Art ist in der DE 20 2008 003 921 U1 beschrieben, jedoch ohne einen Dichtring gegen das Eindringen von Wasser. Auch die in der WO 2008/120252 A1 beschriebene Sanitärarmatur weist keinen Dichtring auf.

Aufgabe der vorliegenden Erfindung ist es, die konstruktiven Voraussetzungen dafür zu schaffen, dass eine größere Freiheit in der Gestaltung der sanitären Einhebel-Mischarmatur gegeben ist und der Einfluss von Fertigungstoleranzen reduziert ist.

Diese Aufgabe wird erfindungsgemäß durch eine sanitäre Einhebel-Mischarmatur mit den im Patentanspruch 1 angegebenen Merkmalen gelöst.

Die Erfindung macht Gebrauch von der Erkenntnis, wie sie beispielsweise aus der oben erwähnten DE 86 27 223 U1 bekannt ist, dass die ringförmigen, auf der Oberseite des Gehäuses vorgesehenen Krägen von bekannten Einhebel-Mischarmaturen weggelassen werden können und auf diese Weise ein zusätzlicher Gestaltungsspielraum gewonnen wird, wenn auf andere Weise dafür Sorge getragen wird, dass kein Wasser durch den Spalt zwischen der ringförmigen Kappe und dem Gehäuse nach innen dringt. Die dichtende Wirkung des zylindrischen Kragens, der sich bei vielen Sanitärarmaturen findet, wird ersetzt durch einen gesonderten Dichtring. Der Designer von Sanitärarmaturen hat dadurch gestalterische Möglichkeiten, die ihm bei Sanitärarmaturen mit zylindrischen Krägen nicht zur Verfügung standen.

Erfindungsgemäß ist vorgesehen, dass der Dichtring zwischen der Unterseite der ringförmigen Kappe und der Oberseite des Gehäuses angeordnet ist. Dadurch ist es möglich, dass die Dichtung als Axialdichtung ausgebildet sein kann. In Zusammenhang damit, dass erfindungsgemäß außerdem die ringförmige Kappe auf ein Stellgewinde eines in die Öffnung eingeschraubten Schraubteils aufgeschraubt ist, kann die Dichtung in axialer Richtung mit einstellbarem Druck belastet werden; eine Abhängigkeit von Fertigungstoleranzen, wie sie bei Radialdichtungen vorkommen, wird dadurch deutlich reduziert.

Bei einer zweckmäßigen Ausführungsform der Erfindung weist die Erfindung einen sich im Wesentlichen axial erstreckenden Befestigungsbereich auf, der in einem Ringspalt der ringförmigen Kappe untergebracht ist. Diese Ausgestaltung des Dichtringes und der ringförmigen Kappe erleichtert die Montage und stellt außerdem den korrekten Sitz des Dichtrings sicher.

Der Befestigungsbereich des Dichtrings umfasst zweckmäßigerweise mehrere Segmente. Hierdurch wird die Montage des Dichtringes an der ringförmigen Kappe erleichtert.

Vorteilhaft ist schließlich, wenn der Dichtring eine radial überstehende Dichtlippe aufweist. Hierdurch wird die erstrebte Dichtwirkung auch in dem Falle noch sichergestellt, wenn der radial innen liegende Bereich des Dichtringes über der Öffnung an der Oberseite des Gehäuses, also dort hohl, liegt.

Ein Ausführungsbeispiel der Erfindung wird nachfolgend anhand der Zeichnung näher erläutert; es zeigen
- Figur 1: im Schnitt den oberen Bereich einer sanitären Einhebel-Mischarmatur;
- Figur 2: eine Detailvergrösserung von Figur 1;
- Figur 3: im Maßstab der Figur 2 einen Formdichtring, wie er in der Einhebel-Mischarmatur der Figur 1 verwendet wird;
- Figur 4: in kleinerem Maßstab und perspektivisch den Formdichtring von Figur 3.

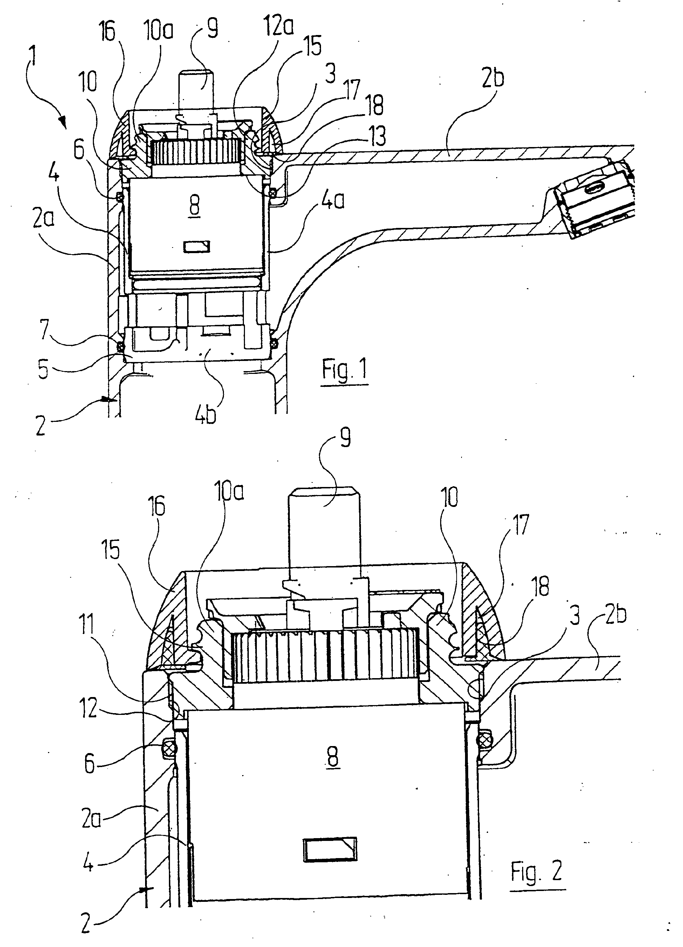

In Figur 1 ist der obere Bereich einer sanitären Einhebel-Mischarmatur dargestellt und insgesamt mit dem Bezugszeichen 1 versehen, wie sie beispielsweise an Waschtischen oder dergleichen eingesetzt wird. Die Einhebel-Mischarmatur 1 besitzt ein Gehäuse 2, das seinerseits einstückig aus einem im Wesentlichen vertikal verlaufenden Hauptteil 2a und einem sich von dem Hauptteil 2a seitlich weg erstreckenden Auslauf 2b zusammengesetzt ist. Unter "im Wesentlichen vertikal" werden hier auch Abweichungen der Achse des Hauptteiles 2a von der Vertikalen verstanden, wie sie bei derartigen Einhebel-Mischarmaturen üblich sind, und die durchaus bis zu 40° betragen können.

Das vom Hauptteil 2a abliegende Ende des Auslaufs 2b sowie ein dort angeordneter und nicht eigens mit einem Bezugszeichen versehener Perlator sind in Figur 1 nur teilweise gezeigt.

Durch eine Öffnung 3 in der Oberseite des Gehäuses 2 ist ein Einsatz 4 eingeführt, der auf einer Stufe 5 des Gehäuses 2 aufsteht. Der in seiner Außenkontur im Wesentlichen kreiszylindrisch ausgebildete Einsatz 4 ist gegenüber der Innenwandung des Gehäuses 2 durch zwei O-Ringdichtungen 6, 7 abgedichtet. Der obere Bereich 4a des Einsatzes 4 ist becherförmig ausgebildet und bildet so einen Aufnahmeraum für eine Steuerkartusche 8. Diese enthält in bekannter Weise die Steuerelemente, die zur Einstellung des Wasservolumenstromes und der Wassertemperatur benötigt werden; dabei handelt es sich im Allgemeinen um Keramikscheiben. Die Steuerkartusche 8 weist an ihrer Unterseite Einlassöffnungen für Kaltund Warmwasser sowie eine Auslassöffnung für Mischwasser auf. Diese sind in der Zeichnung nicht zu erkennen. Sie kommunizieren mit entsprechenden Öffnungen in dem verhältnismäßig dicken Bodenteil 4b des Einsatzes 4, an die wiederum Wasserzulaufrohre oder Wasserzulaufschläuche (nicht gezeigt) angeschlossen sind. Durch den Bodenbereich 4b des Einsatzes 4 erstreckt sich außerdem ein Wasserkanal, der die Auslassöffnung der Steuerkartusche 8 mit dem Innenraum des Auslaufes 2b verbindet. All dies ist Stand der Technik und braucht daher nicht näher beschrieben zu werden.

Aus der Oberseite der Steuerkartusche 8 ragt ein Steuerschaft 9, mit dessen Hilfe die in der Steuerkartusche 8 befindlichen Steuerelemente bewegt werden können.
Auf den Steuerschaft 9 wird in der Endmontage ein Handgriff (nicht dargestellt) aufgesteckt.

Ein Schraubteil 10 ist mit Hilfe eines Außengewindes 11 in ein Innengewinde 12 am oberen Ende der Öffnung 3 eingeschraubt. Das Schraubteil 10 liegt mit seiner Unterseite an einer Stufe 13 der Außenkontur der Steuerkartusche 8 an und drückt diese nach unten gegen den Bodenbereich 4b des Einsatzes 4.

Das Schraubteil 10 besitzt einen sich nach oben erstreckenden Kragen 10a, auf dessen Außenseite ein grobes Stellgewinde 15 ausgeformt ist. Auf dieses Stellgewinde 15 ist eine ringförmige Kappe 16 aufgeschraubt, deren Außenmantelfläche kugelkalottenförmig ausgestaltet ist. Die Kappe 16 weist einen sich von ihrer unteren Stirnfläche nach oben erstreckenden Ringspalt 17 auf, dessen Zweck weiter unten deutlich wird.

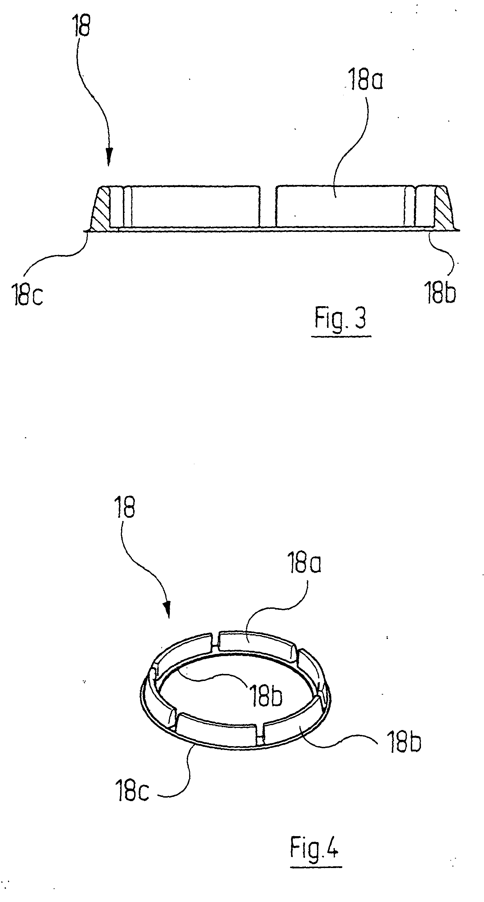

Zwischen der Unterseite der Kappe 16 und der eben über Hauptteil 2a und Auslauf 2b hinweg stufenfrei durchgehenden Oberseite des Gehäuses 2 ist ein Formdichtring 18 angeordnet, welcher das Eindringen von Wasser durch den Spalt zwischen der Kappe 16 und dem Gehäuse 2 nach innen verhindert. Dieser Formdichtring 18 besteht aus einem geeigneten Elastomer und ist in Figur 3 im Schnitt, in Figur 4 in kleinerem Maßstab perspektivisch dargestellt. Er umfasst einen Befestigungsbereich in Form von eine Mehrzahl von im Wesentlichen axial verlaufenden in der Draufsicht kreisbogenförmigen Befestigungssegmenten 18a, sowie einstückig mit diesen, vollständig ohne Unterbrechung umlaufend, einen Dichtflansch 18b sowie eine radial nach außen überstehende Dichtlippe 18c.

Zur Montage des Formdichtringes 18 werden die Befestigungssegmente 18a in den Ringspalt 17 der Kappe 16 eingedrückt. Beim Aufschrauben der Kappe 16 auf das Schraubteil 10 werden der Dichtflansch 18b und insbesondere die Dichtlippe 18c gegen die Oberseite des Gehäuses 2 gedrückt, so dass die erforderliche Dichtwirkung entsteht.

Der auf den Steuerschaft 9 aufzusetzende und mit diesem bewegungssschlüssig zu verbindende Bedienungsgriff ist in der Zeichnung nicht dargestellt. Er besitzt, wie dies bei derartigen Einhebel-Mischarmaturen üblich ist, einen becherförmigen oder kappenartigen Bereich, der - aufgesetzt auf den Steuerschaft 9 - die Kappe 16 so übergreift, dass bei allen Relativstellungen des Bedienungsgriffes und damit des Steuerschaftes 9 zwischen dem kappenartigen Bereich des Bedienungsgriffes und der Kappe 16 nur ein verhältnismäßig kleiner Spalt verbleibt.

## Patentansprüche

1. Sanitäre Einhebel-Mischarmatur mit
a) einem Gehäuse (2), das einen sich in der Einbaulage etwa vertikal erstreckenden Hauptteil (2a) und einstückig hiermit einen seitlich wegragenden Auslauf (2b) aufweist;
b) einem durch eine Öffnung (3) an der Oberseite des Hauptteils (2a) zugänglichen Aufnahmeraum, in dem eine Steuerkartusche (8) untergebracht ist, welche den Wasserstrom beeinflussende Steuerelemente enthält und die einen Steuerschaft (9) aufweist, der durch die Öffnung (3) an der Oberseite des Hauptteils (2a) des Gehäuses (2) nach oben ragt;
c) einer ringförmigen Kappe (16), die auf der Oberseite des Hauptteils (2a) des Gehäuses (2) angebracht ist, von dem Steuerschaft (9) durchgriffen wird und eine kugelkalottenförmige Außenfläche aufweist;
d) einem Bedienungsgriff, der einen kappenartigen Bereich und einen Handgriff aufweist und mit dem Steuerschaft (9) bewegungsschlüssig verbunden ist, wobei der kappenartige Bereich die ringförmige Kappe (16) übergreift;
e) einem zwischen der ringförmigen Kappe (16) und dem Gehäuse (2) angeordneten Dichtring (18);
wobei
f) die Oberseite des Gehäuses (2) über das Hauptteil (2a) und den Auslauf (2b) hinweg glatt und im Wesentlichen stufenfrei ausgebildet ist, insbesondere keinen nach oben ragenden zylindrischen Kragen aufweist;
**dadurch gekennzeichnet, dass**
g) der Dichtring (18) zwischen der Unterseite der ringförmigen Kappe (16) und der Oberseite des Gehäuses (2) angeordnet ist;
h) die ringförmige Kappe (16) auf ein Stellgewinde (15) eines in die Öffnung (3) eingeschraubten Schraubteiles (10) aufgeschraubt ist.

2. Sanitäre Einhhebel-Mischarmatur nach Anspruch 1,
**dadurch gekennzeichnet, dass** der Dichtring (18) einen sich im Wesentlichen axial erstreckenden Befestigungsbereich (18a) aufweist, der in einem Ringspalt (17) der ringförmigen Kappe (16) untergebracht ist.

3. Sanitäre Einhebel- Mischarmatur nach Anspruch 2,
**dadurch gekennzeichnet, dass** der Befestigungsbereich des Dichtrings (18) mehrere in der Draufsicht kreisbogenförmige Segmente (18a) umfasst.

4. Sanitäre Einhebel-Mischarmatur nach einem der vorhergehenden Ansprüche, **dadurch gekennzeichnet, dass** der Dichtring (18) eine radial überstehende Dichtlippe (18c) aufweist.

## Claims

1. A sanitary single-lever mixer fitting having
a) a housing (2) which has a main part (2a) extending approximately vertically in the installed position and, in one piece therewith, an outlet (2b) which projects away laterally;
b) a receiving chamber which is accessible through an opening (3) in the upper side of the main part (2a) and in which a control cartridge (8) is accommodated which contains the control element influencing the water flow and has a control shaft (9) which projects upwards through the opening (3) in the upper side of the main part (2a) of the housing (2);
c) an annular cap (16) which is mounted on the upper side of the main part (2a) of the housing (2), has the control shaft (9) reaching through it and has a spherical outer surface;
d) an operating handle which has a cap-like region and a handle and is movably connected to the control shaft (9), wherein the cap-like region reaches over the annular cap (16) ;
e) a sealing ring (18) arranged between the annular cap (16) and the housing (2),
wherein
f) the upper side of the housing (2) is constructed to be smooth and substantially continuous over the main part (2a) and the outlet (2b), particularly having no upwardly projecting cylindrical collars;
**characterised in that**
g) the sealing ring (18) is arranged between the lower side of the annular cap (16) and the upper side of the housing (2);
h) the annular cap (16) is screwed onto an adjustment thread (15) of a screw part (10) screwed into the opening (3).

2. A sanitary single-lever mixer fitting according to Claim 1, **characterised in that** the sealing ring (18) has a substantially axially extending mounting region (18a) which is accommodated in an annular gap (17) of the annular cap (16).

3. A sanitary single-lever mixer fitting according to Claim 2, **characterised in that** the mounting region of the sealing ring (18) comprises a plurality of arcuate segments (18a) as seen in plan view.

4. A sanitary single-lever mixer fitting according to one of the preceding claims, **characterised in that** the sealing ring (18) has a radially protruding sealing lip (18c).

## Revendications

1. Mitigeur sanitaire à levier unique, comprenant
a) un corps (2) comportant une partie principale (2a) s'étendant à peu près verticalement dans la position installée, et une sortie (2b) faisant saillie latéralement, d'un seul tenant, au-delà de ladite partie ;
b) un espace de réception, accessible à travers un orifice (3) pratiqué à la face supérieure de ladite partie principale (2a), et dans lequel est logée une cartouche de commande (8) qui renferme des éléments de commande influençant l'écoulement d'eau, et présente un fût de commande (9) dépassant, vers le haut, à travers l'orifice (3) pratiqué à la face supérieure de la partie principale (2a) du corps (2) ;
c) un capuchon annulaire (16) qui est implanté sur ladite face supérieure de la partie principale (2a) du corps (2), est traversé par le fût de commande (9), et est doté d'une surface extérieure en forme de calotte sphérique ;
d) une manette d'actionnement qui inclut une région du type capuchon, et une poignée, et est en liaison motrice avec ledit fût de commande (9), ladite région du type capuchon venant coiffer ledit capuchon annulaire (16) ;
e) une bague d'étanchement (18), interposée entre ledit capuchon annulaire (16) et ledit corps (2) ;
sachant que
f) la face supérieure dudit corps (2) est de réalisation lisse et essentiellement exempte de gradins sur l'étendue intégrale de ladite partie principale (2a) et de ladite sortie (2b), et est notamment dépourvue de collerette cylindrique en saillie vers le haut,
**caractérisé par le fait que**
g) la bague d'étanchement (18) est interposée entre la face inférieure du capuchon annulaire (16) et la face supérieure du corps (2) ;
h) ledit capuchon annulaire (16) est rapporté, par vissage, sur un filetage d'ajustement (15) d'une partie vissable (10) qui est vissée dans l'orifice (3).

2. Mitigeur sanitaire à levier unique, selon la revendication 1, **caractérisé par le fait que** la bague d'étanchement (18) est pourvue d'une zone de fixation (18a) s'étendant, pour l'essentiel, dans le sens axial et intégrée dans un interstice annulaire (17) du capuchon annulaire (16).

3. Mitigeur sanitaire à levier unique, selon la revendication 2, **caractérisé par le fait que** la zone de fixation de la bague d'étanchement (18) se compose de plusieurs segments (18a) de configuration en arc de cercle observés par-dessus.

4. Mitigeur sanitaire à levier unique, selon l'une des revendications précédentes, **caractérisé par le fait que** la bague d'étanchement (18) présente une lèvre d'étanchement (18c) en débord dans le sens radial.
